## Europäisches Patentamt
## European Patent Office
## Office européen des brevets

(11) Veröffentlichungsnummer: **0 092 833**
B1

(12)

# EUROPÄISCHE PATENTSCHRIFT

(45) Veröffentlichungstag der Patentschrift:
02.10.85

(51) Int. Cl.⁴: **F 16 B 13/06**

(21) Anmeldenummer: **83104043.1**

(22) Anmeldetag: **25.04.83**

(54) Verankerungshülse mit Zentralbohrung für die Aufnahme einer Spreizschraube.

(30) Priorität: **26.04.82 DE 3215557**

(43) Veröffentlichungstag der Anmeldung:
**02.11.83 Patentblatt 83/44**

(45) Bekanntmachung des Hinweises auf die Patenterteilung:
**02.10.85 Patentblatt 85/40**

(84) Benannte Vertragsstaaten:
**AT CH FR LI**

(56) Entgegenhaltungen:
**DE - A - 2 424 176**
**FR - A - 2 349 053**

(73) Patentinhaber: **HILTI Aktiengesellschaft,
FL-9494 Schaan (LI)**

(72) Erfinder: **Leibhard, Erich, Bauweberstrasse 2,
D-8000 München 71 (DE)**

(74) Vertreter: **Wildi, Roland, Hilti Aktiengesellschaft
Patentabteilung, FL-9490 Schaan (LI)**

BUNDESDRUCKEREI BERLIN

## Beschreibung

Die Erfindung betrifft eine Verankerungshülse mit Zentralbohrung für die Aufnahme einer Spreizschraube, wobei die Zentralbohrung einen zylindrischen Führungsabschnitt und einen sich in Einführrichtung verjüngenden und an den Führungsabschnitt anschließenden Spreizabschnitt aufweist und in der Verankerungshülse zum einführrichtungsseitigen Ende hin offene Längsschlitze angeordnet sind.

Zur Durchführung von Befestigungen sind Verankerungshülsen, beispielsweise aus Kunststoff, bekannt, in die zwecks Erzielung einer Verankerung eine Spreizschraube unter Gewindeeingriff drehend vorgetrieben wird. Die Zentralbohrung solch bekannter Verankerungshülsen ist beispielsweise gewindefrei und weist einen sich nach vorne verjüngenden Spreizabschnitt auf. Der Gewindeeingriff kommt zustande, indem die zumeist als Holzschraube ausgebildete Spreizschraube vom Handhabenden unter axialem Druck und unter Drehung gegen den sich verjüngenden Spreizabschnitt geführt wird und sich dabei selbst Gewindegänge schneidet. Durch das Vortreiben der Spreizschraube wird die Verankerungshülse im Bereich des Spreizabschnittes gegen die Wandung der Aufnahmebohrung eines Aufnahmewerkstückes radial ausgelenkt und dadurch verspannt. Ein späteres Lösen der Befestigung ist durch Zurückdrehen der Spreizschraube möglich, wobei hierzu wiederum der Gewindeeingriff maßgeblich ist.

Ein erheblicher Nachteil dieser Verankerungshülsen besteht darin, daß das drehende Vortreiben der Spreizschraube eines großen Kraft- und Zeitaufwandes des Handhabenden bedarf. Zudem erfordern diese Verankerungshülsen eine relativ genaue Abstimmung des Hülsendurchmessers auf den Durchmesser der Aufnahmebohrung. Bei zu großer Aufnahmebohrung dreht sich die Verankerungshülse in der Aufnahmebohrung beim Auflaufen der Spreizschraube am Spreizabschnitt mit und die Spreizschraube kann somit keinen Gewindeeingriff schaffen; bei zu kleiner Aufnahmebohrung wird die Verankerungshülse zusammengedrückt, so daß das für das Vortreiben der Spreizschraube aufzubringende Drehmoment zu groß ist.

Die vorgenannten Nachteile des zeitaufwendigen Befestigungsvorganges werden bei einer anderen bekannten Verankerungshülse weitgehend vermieden. Auch diese Verankerungshülse weist eine Zentralbohrung mit sich in Einführrichtung verjüngendem Spreizabschnitt auf. Zur Befestigung derselben wird eine sogenannte Nagelschraube unter Schlageinwirkung in die Zentralbohrung vorgetrieben. Es kommt so wiederum zur radialen Weitung und Verspannung der Verankerungshülse in der Aufnahmebohrung. Das Vortreiben der Nagelschraube erfolgt mit Hilfe eines Hammers überaus einfach und rasch.

Beim Vortreiben der Nagelschraube kann es unter Umständen zu keinem zuverlässigen Gewindeeingriff in der Verankerungshülse kommen. Deshalb ist ein Lösen der Befestigung durch Zurückdrehen der Nagelschraube vielfach nicht möglich. Eine weitere Eigenschaft dieser Verankerungshülse besteht darin, daß diese zur Erzielung der Befestigung einer Stützschulter bedarf, welche beim Vortreiben der Nagelschraube ein Mitverschieben der Verankerungshülse in der Aufnahmebohrung unterbindet. Diese Stützschulter ist an dem der Einführrichtung abgewandten Ende der Verankerungshülse vorgesehen und legt sich gegen das vom Schaft der Verankerungshülse durchgriffene Befestigungsgut an. Es ist somit nicht möglich, sogenannte Durchsteckmontagen auszuführen, die mittels der Spreizschraube ein Verspannen des Befestigungsgutes zum Aufnahmewerkstück hin erlauben.

Der Erfindung liegt die Aufgabe zugrunde, eine Verankerungshülse zu schaffen, deren Befestigung einfach und mit geringem Zeitaufwand möglich ist, sich durch zuverlässigen Gewindeeingriff der Spreizschraube auszeichnet und auch für Durchsteckmontage geeignet ist.

Erfindungsgemäß wird die Aufgabe dadurch gelöst, daß die Verankerungshülse im Bereich des Führungsabschnittes einen die Mantelkontur überragenden Vorsprung aufweist.

Die Verankerungshülse wird in einer im wesentlichen auf den Durchmesser der Mantelkontur abgestimmten Aufnahmebohrung befestigt. Hierzu wird die Verankerungshülse, in die eine Spreizschraube unter Angriff am Führungsabschnitt der Zentralbohrung einragt, in die Aufnahmebohrung vorgetrieben. Der axiale Kraftangriff kann dabei direkt auf die Verankerungshülse oder über die Spreizschraube auf die Verankerungshülse erfolgen. Der bzw. eine Mehrzahl über den Umfang verteilter Vorsprünge werden dabei von der Aufnahmebohrung gegen das Zentrum der Verankerungshülse gedrängt, so daß sich die Wandung des Führungsabschnitts der Zentralbohrung unter plastischer Verformung dem Gewinde der Spreizschraube anpaßt. Es eignen sich hierzu sowohl Schrauben mit Holzgewinde als auch solche mit Maschinengewinde. Während die Spreizschraube aus Stahl besteht, kann die Verankerungshülse praktisch aus beliebigem weicherem Material, wie beispielsweise Kunststoff, Aluminium oder dgl., beschaffen sein. Das Einschlagen der Verankerungshülse führt aber auch zu einer Verkeilung des den Vorsprung tragenden Bereichs in der Aufnahmebohrung.

Nach erfolgtem Einbringen der Verankerungshülse in die Aufnahmebohrung und dadurch geschaffenem Gewindeeingriff gegenüber der Spreizschraube wird diese vom Handhabenden durch Drehen in den Spreizabschnitt vorgetrieben, wodurch es zu einer radialen Verdrängung und Verspannung des den Spreizabschnitt tragenden Bereichs der Verankerungshülse im Aufnahmewerkstück kommt. Der Kopf der Spreizschraube läuft dabei direkt oder indirekt am Befestigungsgut auf und spannt dieses satt gegen das Aufnahmewerkstück. Analog der bekannten Verankerungshülse kann ebenso eine Stützschulter vorgesehen sein, die sich am Befestigungsgut anlegt.

Um insbesondere bei Aufnahmebohrungen mit exakter zylindrischer Mündung das Einlaufen des Vorsprunges zu erleichtern, ist dieser vorzugsweise entgegen der Einführrichtung erweitert. Die Erweiterung ist dabei zweckmäßig konischer Art, wobei die konische Kontur zur Hülsenachse einen Winkel zwischen 2 und 10° einschließt.

Eine gleichmäßige umlaufende Gewindeformung in der Verankerungshülse wird mit Vorteil durch einen als umlaufende Erweiterung ausgebildeten Vorsprung erzielt. Der Vorsprung erhält dadurch beispielsweise die Form einer Kegelschulter, deren entgegen der Einführrichtung weisendes Ende im wesentlichen rechtwinklig zur Hülsenachse verläuft. Ein Auslauf dieser Art schafft einen die Auszugskraft der Verankerungshülse erhöhenden Eingriff in der Aufnahmebohrung.

In Weiterbildung der Erfindung ist das einführrichtungsseitige Ende des Vorsprunges im einführrichtungsseitigen Endbereich des Führungsabschnittes vorgesehen. Der Gewindeeingriff zwischen der Spreizschraube und der Verankerungshülse kommt dadurch nahe dem Spreizabschnitt zu liegen, wodurch besonders kurze Baulängen der Verankerungshülse möglich sind.

Nach einem weiteren Vorschlag der Erfindung erstrecken sich die Längsschlitze entgegen der Einführrichtung über den Vorsprung hinaus. Dadurch wird die radiale Verformbarkeit der Verankerungshülse und damit die Formung des Gewindes erleichtert. Zudem dienen die Längsschlitze als Freiraum, der beim Formen des Gewindes überschüssiges Material der Verankerungshülse aufnimmt, was vor allem bei gegenüber der Verankerungshülse im Durchmesser unterdimensionierten Aufnahmebohrungen der Fall ist.

Die Erfindung wird nun anhand einer Zeichnung, die ein Ausführungsbeispiel wiedergibt, näher erläutert. Es zeigt

Fig. 1 eine Verankerungshülse, zur Hälfte im Längsschnitt, mit eingeführter Spreizschraube,

Fig. 2 die Verankerungshülse mit Spreizschraube nach Fig. 1, in eine Aufnahmebohrung vorgetrieben,

Fig. 3 die Verankerungshülse mit Spreizschraube nach Fig. 1, im befestigten Zustand.

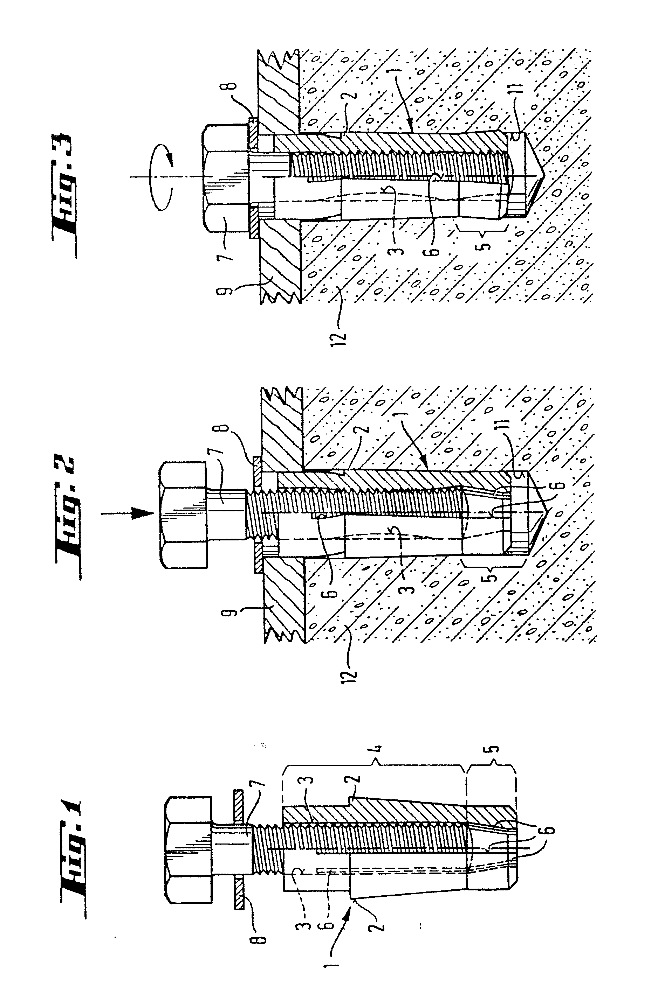

Die in Fig. 1 insgesamt mit 1 bezeichnete Verankerungshülse weist im wesentlichen hohlzylindrische Form auf, deren Mantelkontur von einem umlaufenden Vorsprung 2 überragt wird. Der Vorsprung 2 erweitert sich entgegen der Einführrichtung der Verankerungshülse 1 kegelig. Die Verankerungshülse 1 ist von einer Zentralbohrung 3 durchsetzt, die in einen zylindrischen Führungsabschnitt 4 und einen daran anschließenden sich in Einführrichtung verjüngenden Spreizabschnitt 5 unterteilt ist. Zur Begünstigung der radialen Verformbarkeit der Verankerungshülse 1 weist diese drei zum einführrichtungsseitigen Ende hin offene Längsschlitze 6 auf, deren zwei der Fig. 1 entnehmbar sind. Die Längsschlitze 6 überragen den den Vorsprung 2 tragenden Bereich der Verankerungshülse 1 entgegen deren Einführrichtung.

In die Zentralbohrung 3 ist eine Spreizschraube 7 in Form einer handelsüblichen Maschinenschraube bis zum Beginn des den Bohrungsquerschnitt verengenden Spreizabschnittes 5 eingeführt. Auf dem Schaft der Spreizschraube 7 sitzt eine Beilagscheibe 8.

Die Verankerungshülse 1 bzw. die in der Fig. 1 dargestellte Anordnung wird alsdann durch ein plattenförmiges Befestigungsgut 9 hindurch in die Aufnahmebohrung 11 eines Aufnahmewerkstücks 12 vorgetrieben. Der Durchmesser der Aufnahmebohrung 11 ist auf die zylindrische Mantelkontur der Verankerungshülse 1 abgestimmt, so daß es beim Vortreiben der Verankerungshülse zu einem Verkeilen des Vorsprunges 2 in der Aufnahmebohrung kommt. Dieser Setzvorgang wird, wie ein Pfeil in Fig. 2 andeutet, durch Beaufschlagen der Spreizschraube 7 bewerkstelligt.

Mit der erwähnten Verkeilung des Vorsprunges 2 in der Aufnahmebohrung 11 geht aber auch ein Zusammendrücken der Verankerungshülse 1 bzw. der Zentralbohrung 3 im Bereich des Vorsprunges einher. Da die Verankerungshülse 1 gegenüber der Spreizschraube 7 aus weicherem Material, beispielsweise Aluminium, besteht, wird durch das erwähnte Zusammendrücken von der Spreizschraube 7 in den Führungsabschnitt 4 ein Gewinde eingeformt. Die Spreizschraube 7 ist nun über den so geschaffenen Gewindeeingriff in der Verankerungshülse 1 axial gefaßt, während die Verankerungshülse ihrerseits durch Verkeilung in der Aufnahmebohrung 11 festsitzt (Fig. 2).

Durch anschließendes Vordrehen der Spreizschraube 7 läuft diese in den Spreizabschnitt 5 ein und weitet dabei den zugehörigen Bereich der Verankerungshülse 1 gegen die Wandung der Aufnahmebohrung 11 hin auf (Fig. 3). Dadurch wird der Haltewert der Verankerungshülse 1 erhöht. Am Ende des Vortreibens der Spreizschraube 7 legt sich deren Kopf unter Zwischenlage der Beilagscheibe 8 gegen das Befestigungsgut 9 an und spannt dieses zum Aufnahmewerkstück 12 hin.

Eine Entnahme der Verankerungshülse 1 ist nach vorherigem Zurückschrauben bzw. Entnehmen der Spreizschraube 7 möglich.

## Patentansprüche

1. Verankerungshülse (1) mit Zentralbohrung für die Aufnahme einer Spreizschraube (7), wobei die Zentralbohrung einen zylindrischen Führungsabschnitt (4) und einen sich in Einführrichtung verjüngenden und an den Führungsabschnitt anschließenden Spreizabschnitt (5) auf-

weist und in der Verankerungshülse zum einführrichtungsseitigen Ende hin offene Längsschlitze (6) angeordnet sind, dadurch gekennzeichnet, daß die Verankerungshülse (1) im Bereich des Führungsabschnittes (4) einen die Mantelkontur überragenden Vorsprung (2) aufweist.

2. Verankerungshülse nach Anspruch 1, dadurch gekennzeichnet, daß der Vorsprung (2) sich entgegen der Einführrichtung erweitert.

3. Verankerungshülse nach Anspruch 1 oder 2, dadurch gekennzeichnet, daß der Vorsprung (2) als umlaufende Erweiterung ausgebildet ist.

4. Verankerungshülse nach einem der Ansprüche 1 bis 3, dadurch gekennzeichnet, daß das einführrichtungsseitige Ende des Vorsprunges (2) im einführrichtungsseitigen Endbereich des Führungsabschnittes (4) vorgesehen ist.

5. Verankerungshülse nach einem der Ansprüche 1 bis 4, dadurch gekennzeichnet, daß sich die Längsschlitze (6) entgegen der Einführrichtung über den Vorsprung (2) hinaus erstrecken.

## Claims

1. An anchoring sleeve (1) having a central bore to receive an expanding screw (7) where the central bore has a cylindrical guide section (4) and a narrowing section in the direction of insertion and an expanding section (5) following on the guide section as well as open longitudinal slots (6) arranged inside the anchoring sleeve towards the end of the direction of insertion, characterised by the anchoring sleeve (1) having a protrusion (2) extending beyond the enveloping contour in the region of the guide section (4).

2. An anchoring sleeve according to claim 1, characterised by the protrusion (2) extending in a direction opposite to the direction of insertion.

3. An anchoring sleeve according to claim 1 or 2, characterised by the protrusion (2) taking the form of a circumferential extension.

4. An anchoring sleeve according to claim 1 to 3, characterised by the direction of insertion end of the protrusion (2) is provided in the direction of insertion end region of the guide section (4).

5. An expanding sleeve according to claims 1 to 4, characterised by the longitudinal slots (6) extending beyond the protrusion (2) in a direction opposite to the direction of insertion.

## Revendications

1. Douille d'ancrage (1) à alésage central destiné à la réception d'une vis d'écartement (7), l'alésage central présentant une section de guidage cylindrique (5) et une section d'écartement (5) allant en diminuant dans le sens de l'introduction et se raccordant à la section de guidage, tandis que des fentes longitudinales (6) ouvertes en direction de l'extrémité située sur le côté de l'introduction sont constituées dans la douille d'ancrage, caractérisée par le fait que la douille d'ancrage (1) présente dans la région de la section de guidage (4) une saillie (2) dépassant le contour de son enveloppe.

2. Douille d'ancrage selon la revendication 1, caractérisée par le fait que la saillie (2) va en s'élargissant dans le sens contraire à celui de l'introduction.

3. Douille d'ancrage selon la revendication 1 ou 2, caractérisée par le fait que la saillie (2) est constituée sous forme d'un élargissement périphérique.

4. Douille d'ancrage selon l'une quelconque des revendications 1 à 3, caractérisée par le fait que l'extrémité de la saillie (2) qui est située du côté de l'introduction est prévue dans la zone d'extrémité de la section de guidage (4) qui est du côté de l'introduction.

5. Douille d'ancrage selon l'une quelconque des revendications 1 à 4, caractérisée par le fait que les fentes longitudinales (6) s'étendent au-delà de la saillie (2) dans le sens contraire à celui de l'introduction.

# Fig.1
# Fig.2
# Fig.3

0 092 833